(19) Europäisches Patentamt
European Patent Office
Office européen des brevets

(11) EP 4 696 743 A1

(12) **EUROPEAN PATENT APPLICATION**
published in accordance with Art. 153(4) EPC

(43) Date of publication:
**18.02.2026 Bulletin 2026/08**

(21) Application number: **24788650.0**

(22) Date of filing: **04.04.2024**

(51) International Patent Classification (IPC):
***C08L 27/14*** *(2006.01)* ***C08F 214/18*** *(2006.01)*
***C08K 5/3445*** *(2006.01)*

(52) Cooperative Patent Classification (CPC):
**C08F 214/18; C08K 5/3445; C08L 27/14**

(86) International application number:
**PCT/JP2024/013879**

(87) International publication number:
**WO 2024/214625 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.04.2023 JP 2023064592**

(71) Applicant: **AGC Inc.**
**Chiyoda-ku**
**Tokyo 100-8405 (JP)**

(72) Inventor: **KAWAI, Tsuyoshi**
**Tokyo 100-8405 (JP)**

(74) Representative: **Müller-Boré & Partner Patentanwälte PartG mbB**
**Friedenheimer Brücke 21**
**80639 München (DE)**

(54) **FLUORINE-CONTAINING COPOLYMER COMPOSITION AND CROSSLINKED RUBBER ARTICLE**

(57) Provided are: a fluorine-containing copolymer composition from which a crosslinked rubber article with improved adhesiveness (reduced adhesion strength) can be obtained; and a crosslinked rubber article obtained using the fluorine-containing copolymer composition. This fluorine-containing copolymer composition comprises a fluorine-containing copolymer, an imidazole compound having an imidazole backbone, and a crosslinker, wherein the imidazole compound has a content of 0.80 parts by mass or less based on 100.00 parts by mass of the fluorine-containing copolymer.

EP 4 696 743 A1

## Description

Technical Field

The present invention relates to a fluorine-containing copolymer composition and a crosslinked rubber article.

Background Art

Crosslinked rubber (so-called "fluoroelastomer") articles prepared by cross-linking a fluorine-containing copolymer such as perfluoroelastomer (FFKM) (see, for example, PTLs 1-3) have, for instance, excellent heat resistance, chemical resistance, oil resistance, and weather resistance, and are therefore used as sealing materials such as O-rings, packings, oil seals, gaskets, and cushioning materials, etc., in a wide range of applications such as semiconductor manufacturing, vehicles, ships, aircrafts, general machinery, construction, and chemical plants.

Citation List

Patent Literature

PTL 1: International Publication No. WO 2019/004059
PTL 2: International Publication No. WO 2020/184427
PTL 3: International Publication No. WO 2021/210502

Summary of Invention

Technical Problem

Crosslinked rubber articles prepared by cross-linking perfluoroelastomers, for example, when used as sealing materials for semiconductor manufacturing equipment involving opening and closing doors, have a problem because they adhere too tightly, making it difficult to open and close doors. Therefore, it has been desired to improve the adhesiveness of crosslinked rubber articles (to reduce adhesion strength).
However, it could not necessarily be said that the crosslinked rubber articles obtained from the fluorine-containing copolymer compositions as described in PTLs 1 to 3 have sufficiently improved adhesiveness (sufficiently reduced adhesion strength).
The present invention has been made in view of such a situation, and the purpose of the present invention is to provide a fluorine-containing copolymer composition from which a crosslinked rubber article with improved adhesiveness (reduced adhesion strength) can be obtained, and a crosslinked rubber article obtained using the fluorine-containing copolymer composition.

Solution to Problem

The present invention is based on the findings that a crosslinked rubber article with improved adhesiveness (reduced adhesion strength) can be obtained by using a fluorine-containing copolymer composition containing a predetermined amount of imidazole compound added to a fluorine-containing copolymer and a crosslinker.
Although the detailed mechanism is unknown, it is assumed that secondary cross-linking tends to progress on the outside of the fluorine-containing copolymer composition, thus reducing the adhesiveness.
The present invention provides the following items.

[1] A fluorine-containing copolymer composition comprising a fluorine-containing copolymer, an imidazole compound having an imidazole backbone, and a crosslinker, wherein the imidazole compound has a content of 0.80 parts by mass or less based on 100.00 parts by mass of the fluorine-containing copolymer.
[2] The fluorine-containing copolymer composition according to [1] above, wherein the imidazole compound has a content of 0.30 parts by mass or less based on 100.00 parts by mass of the fluorine-containing copolymer.
[3] The fluorine-containing copolymer composition according to [1] or [2] above, wherein the imidazole compound is liquid or solid at 25°C and the solid imidazole compound has a melting point of 180°C or lower.
[4] The fluorine-containing copolymer composition according to any one of [1] to [3] above, wherein the imidazole compound is represented by the following general formula (1):

[Chem.1]

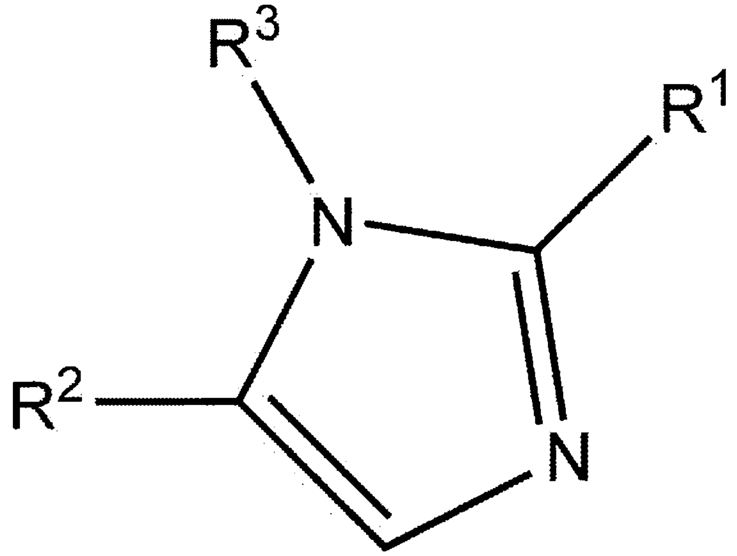

general formula (1)

Wherein in the general formula (1), $R^1$ is a hydrogen atom, a $C_{1-17}$ alkyl group, or a phenyl group, $R^2$ is a hydrogen atom or a methyl group, and $R^3$ is a hydrogen atom, a methyl group, or a benzyl group.

[5] The fluorine-containing copolymer composition according to any one of [1] to [4] above, wherein the fluorine-containing copolymer comprises a tetrafluoroethylene (TFE)-based unit and a perfluoroalkylvinylether (PAVE)-based unit or comprises a vinylidene fluoride-based unit.

[6] The fluorine-containing copolymer composition according to [5] above, wherein the fluorine-containing copolymer comprises a tetrafluoroethylene (TFE)-based unit and a perfluoroalkylvinylether (PAVE)-based unit.

[7] The fluorine-containing copolymer composition according to [5] or [6] above, wherein the fluorine-containing copolymer further comprises a fluorine-containing monomer-based unit having two or more polymerizable unsaturated bonds.

[8] The fluorine-containing copolymer composition according to [7] above, wherein the fluorine-containing monomer-based unit having two or more polymerizable unsaturated bonds is a unit based on a compound represented by the following general formula (2):

$$(CR^{31}R^{32}{=}CR^{33})_{a3}R^{34} \ldots \qquad \text{general formula (2)}$$

wherein in the general formula (2), $R^{31}$, $R^{32}$, and $R^{33}$ are each independently a hydrogen atom, a fluorine atom, a methyl group, or a trifluoromethyl group, $R^{34}$ is an a3-valent $C_{1-10}$ perfluorohydrocarbon group or an a3-valent $C_{1-10}$ perfluorohydrocarbon group having an etheric oxygen atom at an end thereof or in a carbon-carbon bond thereof, and a3 represents an integer of 2 to 6, wherein a plurality of $R^{31}$ moieties, a plurality of $R^{32}$ moieties, and a plurality of $R^{33}$ moieties are each the same or different.

[9] The fluorine-containing copolymer composition according to any one of [5] to [8] above, wherein the fluorine-containing copolymer further comprises at least one of an iodine atom and a bromine atom.

[10] The fluorine-containing copolymer composition according to any one of [5] to [9] above, wherein the fluorine-containing copolymer further comprises a unit based on a nitrile group-containing compound.

[11] A crosslinked rubber article produced by cross-linking a fluorine-containing copolymer in the fluorine-containing copolymer composition according to any one of [1] to [10] above.

## Advantageous Effects of Invention

The present invention can provide a fluorine-containing copolymer composition from which a crosslinked rubber article with improved adhesiveness (reduced adhesion strength) can be obtained, and a crosslinked rubber article obtained using the fluorine-containing copolymer composition.

Description of Embodiments

Here, the terms and the definitions and meanings of notations herein are given below.

The "room temperature" means from 20 to 25°C.

The "unit" is a generic term for an atomic group derived from a single molecule of the above monomer and an atomic group obtained by chemical conversion of a part of the above atomic group, which atomic group is directly formed by polymerization of the monomer. The "monomer-based unit" is hereinafter also simply referred to as a "unit".

The term "rubber" means rubber that exhibits properties defined by JIS K 6200 (2008) and is distinguished from "resin".

The "melting point" means a temperature corresponding to the maximum value of the melting peak measured by differential scanning calorimetry (DSC).

The "imidazole compound having an imidazole backbone" may function as a crosslinker. Therefore, the "crosslinker" herein means a "crosslinker other than an imidazole compound".

[Fluorine-containing copolymer composition]

A fluorine-containing copolymer composition according to an embodiment of the present invention (hereinafter, also referred to as a "fluorine-containing copolymer composition of this embodiment") comprises: a fluorine-containing copolymer, an imidazole compound having an imidazole backbone, and a crosslinker.

The content of the imidazole compound based on 100.00 parts by mass of the fluorine-containing copolymer is not particularly limited as long as the content is 0.80 parts by mass or less, but from the viewpoint of inhibition of scorch, preferably 0.70 parts by mass or less, more preferably 0.50 parts by mass or less, particularly preferably 0.30 parts by mass or less, and on the other hand, from the viewpoint of inhibition of adhesiveness, preferably 0.01 parts by mass or more, more preferably 0.10 parts by mass or more, and particularly preferably 0.25 parts by mass or more.

<Imidazole compound>

The imidazole compound is not particularly limited as long as the compound has an imidazole backbone, and is preferably, for example, a compound represented by the following general formula (1):

[Chem.2]

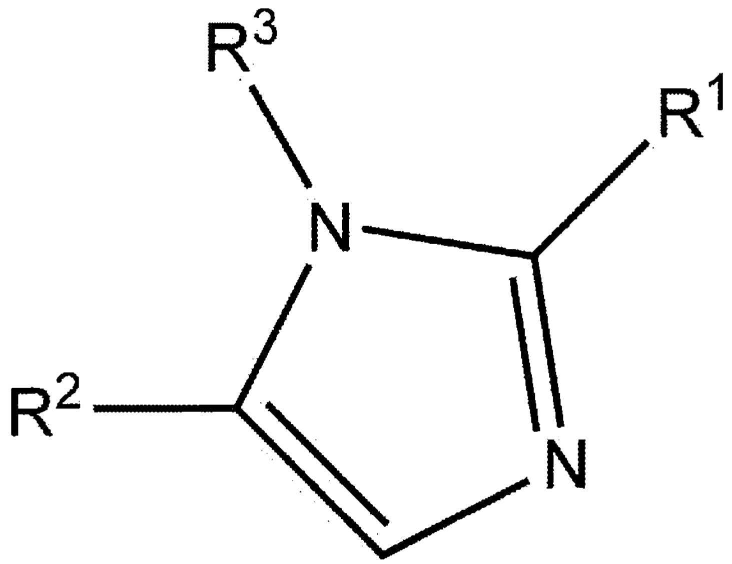

general formula (1)

wherein in the general formula (1), $R^1$ is a hydrogen atom, a $C_{1-17}$ alkyl group, or a phenyl group, $R^2$ is a hydrogen atom or a methyl group, and $R^3$ is a hydrogen atom, a methyl group, or a benzyl group. $R^1$ is preferably an unsubstituted $C_{1-17}$ alkyl group or an unsubstituted phenyl group, and more preferably an unsubstituted $C_{1-17}$ alkyl group. The number of carbon atoms in the unsubstituted $C_{1-17}$ alkyl group is preferably from 1 to 12, more preferably from 1 to 5, and still more preferably from 1 to 3. $R^2$ is preferably an unsubstituted methyl group. $R^3$ is preferably a hydrogen atom, an unsubstituted methyl group, or an unsubstituted benzyl group, and more preferably a hydrogen atom.

Examples of the imidazole compound include, but are not particularly limited to, 2-ethyl-4-methylimidazole

(melting point: ca. 40°C), 1H-imidazole (melting point: 88-92°C), 2-methylimidazole (melting point: ca. 140-148°C), 2-undecylimidazole (melting point: ca. 69-74°C), 2-heptadecylimidazole (melting point: ca. 86-91°C), 1,2-dimethylimidazole(melting point: ca. 36°C), 2-phenylimidazole(melting point: 137-147°C), 2-phenyl-4-methylimidazole(melting point: 174-184°C), 1-benzyl-2-methylimidazole (melting point: ca. 50°C), or 1-benzyl-2 1-benzyl-2-phenylimidazole (melting point: ca. 40°C). One kind of them may be used singly or two or more kinds thereof may be used in combination. Note that the "ca." means "approximately".

Among these, 2-ethyl-4-methylimidazole is preferred from the viewpoint of inhibition of adhesiveness.

The imidazole compound is preferably liquid or solid at 25°C, and more preferably liquid at 25°C.

When the imidazole compound is solid at 25°C, the melting point of the imidazole compound is not particularly limited, but from the viewpoint of inhibition of adhesiveness, the melting point is preferably 180°C or lower, more preferably 120°C or lower, and particularly preferably 60°C or lower. On the other hand, from the viewpoint of inhibition of adhesiveness, the melting point is preferably 27°C or higher, more preferably 30°C or higher, and particularly preferably 35°C or higher.

The content of the imidazole compound based on the total mass of the fluorine-containing copolymer composition is not particularly limited, but from the viewpoint of inhibition of adhesiveness and scorch, the content is preferably 0.01 to 0.60 mass%, more preferably 0.05 to 0.40 mass%, and particularly preferably 0.10 to 0.30%.

The fluorine-containing copolymer composition of this embodiment may or may not contain a homopolymer of a fluorine-containing monomer. However, from the viewpoint of providing flexibility as rubber, it is preferable that the composition be a fluorine-containing copolymer composition free of a homopolymer of a fluorine-containing monomer, that is, a fluorine-containing copolymer composition (excluding those containing a homopolymer of a fluorine-containing monomer).

<Fluorine-containing copolymer>

The fluorine-containing copolymer is preferably those that have no melting point.

Examples of the fluorine-containing copolymer include (a) a copolymer comprising a tetrafluoroethylene (hereinafter referred to as "TFE") unit and a perfluoro(alkyl vinyl ether) (hereinafter referred to as "PAVE") unit or (b) a copolymer comprising a vinylidene fluoride (hereinafter referred to as "VdF") unit. One kind of them may be used singly or two or more kinds thereof may be used in combination.

Among these, (a) a copolymer comprising a TFE unit and a PAVE unit is preferred from the viewpoint of heat resistance and chemical resistance.

The content of the fluorine-containing copolymer based on the total mass of the fluorine-containing copolymer composition is not particularly limited, but from the viewpoint of heat resistance and chemical resistance, the content is preferably 70.00 to 99.70 mass%, more preferably 80.00 to 99.30 mass%, and particularly preferably 90.00 to 99.00 mass%.

((a) Copolymer comprising TFE unit and PAVE unit)

TFE is a monomer represented by $CF_2=CF_2$.

The percentage of the TFE unit in all units constituting the fluorine-containing copolymer is not particularly limited, but from the viewpoint of heat resistance and chemical resistance, the percentage is preferably 35 to 90 mol%, more preferably 40 to 89 mol%, and particularly preferably 50 to 80 mol%.

The PAVE is preferably a monomer represented by the following general formula (3):

$$CF_2=CF\text{-}O\text{-}R^{f1} \quad \ldots \qquad \text{general formula (3)}$$

wherein in the general formula (3), $R^{f1}$ is a $C_{1\text{-}10}$ perfluoroalkyl group. The number of carbon atoms in $R^{f1}$ is not particularly limited as long as the number is from 1 to 10, but is preferably from 1 to 8, more preferably from 1 to 6, and particularly preferably from 1 to 5.

Specific examples of PAVE include (i) $CF_2=CFOCF_3$: perfluoro(methyl vinyl ether) (hereinafter referred to as "PMVE"), (ii) $CF_2=CFOCF_2CF_3$: perfluoro(ethyl vinyl ether), (iii) $CF_2=CFOCF_2CF_2CF_3$: perfluoro(propyl vinyl ether) (hereinafter also called "PPVE"), or (iv) $CF_2=CFOCF_2CF_2CF_2CF_3$. One kind of them may be used singly or two or more kinds thereof may be used in combination.

Among these, PMVE and PPVE are preferred in terms of reactivity and availability.

The percentage of the PAVE unit in all units constituting the fluorine-containing copolymer is not particularly limited, but from the viewpoint of heat resistance and chemical resistance, the percentage is preferably 10 to 65 mol%, more preferably 15 to 60 mol%, and particularly preferably 20 to 50 mol%.

The percentage of the content of the TFE and PAVE units in the total content of all units constituting the fluorine-containing copolymer is not particularly limited, but from the viewpoint of heat resistance and chemical resistance, the percentage is preferably 79 to 100 mol%, more preferably 89 to 100 mol%, and particularly preferably 95 to 100 mol%.

Specific preferred examples of (a) the copolymer comprising a TFE unit and a PAVE unit include: (i) a copolymer comprising a TFE unit, a PAVE unit, and at least one of an iodine atom and a bromine atom at the end and/or in the chain; (ii) a copolymer comprising a TFE unit, a PAVE unit, and a C3DVE, C4DVE, C4DV, or C6DV unit as described below, and at least one of an iodine atom and a bromine atom at the end and/or in the chain; (iii) a copolymer comprising a TFE unit, a PAVE unit, and a 8CNVE or MV5CN unit as described below; or (iv) a copolymer comprising a TFE unit, a PAVE unit, a C3DVE, C4DVE, C4DV, or C6DV unit as described below, and a 8CNVE or MV5CN unit as described below.

((b) Copolymer comprising VdF unit)

VdF is a monomer represented by $CF_2=CH_2$.

Specific preferred examples of (b) the copolymer comprising a VdF unit include: (i) a copolymer comprising a VdF unit and a hexafluoropropylene-based unit (hereinafter also referred to as "HFP unit"); (ii) a copolymer comprising a VdF unit, an HFP unit, and a TFE unit; or (iii) a copolymer comprising a VdF unit, a PMVE unit, and an HFP unit.

The percentage of the VdF unit in all units constituting the fluorine-containing copolymer is not particularly limited, but from the viewpoint of inhibition of adhesiveness, the percentage is preferably 40 to 90 mol%, more preferably 45 to 85 mol%, and particularly preferably 50 to 80 mol%.

(Units based on other monomers)

The fluorine-containing copolymer may contain a unit(s) other than the TFE, PAVE, and VdF units. Specific examples thereof include a fluorine-containing monomer-based unit having two or more polymerizable unsaturated bonds, a unit based on a nitrile group-containing compound, a unit based on a monomer represented by the following general formula (5) (hereinafter also referred to as "formula (5) unit"), an HFP unit, or a chlorotrifluoroethylenebased unit. One kind of them may be used singly or two or more kinds thereof may be used in combination.

Among these, a fluorine-containing monomer-based unit having two or more polymerizable unsaturated bonds and a unit based on a nitrile group-containing compound are preferred in terms of heat resistance.

-Fluorine-containing monomer-based unit having two or more polymerizable unsaturated bonds-

Preferably, the fluorine-containing copolymer further comprises a fluorine-containing monomer-based unit having two or more polymerizable unsaturated bonds.

The fluorine-containing monomer-based unit having two or more polymerizable unsaturated bonds may be copolymerized. In this case, the polymerizable double bond at the end of the fluorine-containing monomer-based unit having two or more polymerizable unsaturated bonds reacts during polymerization to give a copolymer with a branched chain.

Examples of the polymerizable unsaturated bond include a carbon atom-carbon atom double bond (C=C) or a carbon atom-carbon atom triple bond (C≡C). One kind of them may be used singly or two or more kinds thereof may be used in combination.

Among these, a double bond is preferred in terms of heat resistance. The number of polymerizable unsaturated bonds is not particularly limited, but from the viewpoint of heat resistance, the number is preferably 2 to 6, more preferably 2 or 3, and particularly preferably 2.

The fluorine-containing monomer having two or more polymerizable unsaturated bonds is preferably a compound represented by the following general formula (2) from the viewpoint of excellent rubber properties when the fluorine-containing copolymer is made into a crosslinked rubber article.

$$(CR^{31}R^{32}=CR^{33})_{a3}R^{34} \quad ... \quad \text{general formula (2)}$$

In the general formula (2), $R^{31}$, $R^{32}$, and $R^{33}$ are each independently a hydrogen atom, a fluorine atom, a methyl group, or a trifluoromethyl group. In the general formula (2), $R^{34}$ represents an a3-valent $C_{1-10}$ perfluorohydrocarbon group or an a3-valent $C_{1-10}$ perfluorohydrocarbon group having an etheric oxygen atom at an end thereof or in a carbon-carbon bond thereof. In the general formula (2), a3 is an integer from 2 to 6, preferably 2 or 3, and more preferably 2. In the general formula (2), the plurality of $R^{31}$, the plurality of $R^{32}$ and the plurality of $R^{33}$ may be each independently the same or different, and are preferably identical to one another.

$R^{31}$, $R^{32}$, and $R^{33}$ are preferably fluorine atoms or hydrogen atoms from the viewpoint of better polymerization reactivity of the fluorine-containing monomer having two or more polymerizable unsaturated bonds, more preferably all fluorine atoms or all hydrogen atoms, and particularly preferably all fluorine atoms from the viewpoint of heat resistance

and chemical resistance of crosslinked rubber articles.

$R^{34}$ may be linear, branched, or cyclic, and is preferably linear or branched and more preferably linear. The number of carbon atoms in $R^{34}$ is preferably from 2 to 10, more preferably from 3 to 8, still more preferably from 3 to 6, and particularly preferably from 3 to 5.

$R^{34}$ may or may not have an etheric oxygen atom, but preferably has an etheric oxygen atom from the viewpoint of better crosslinking reactivity and rubber properties.

The number of etheric oxygen atoms in $R^{34}$ is preferably from 1 to 6, more preferably from 1 to 3, and particularly preferably 1 or 2. The etheric oxygen atom in $R^{34}$ should be present at an end of $R^{34}$.

Specific preferred examples of the monomer represented by formula (2) include a monomer represented by general formula (2-1) and a monomer represented by formula (2-2):

$(CF_2{=}CF)_2R^{41}$ ... general formula (2-1)

In the general formula (2-1), $R^{41}$ represents a divalent $C_{2\text{-}10}$ perfluorohydrocarbon group or a divalent $C_{2\text{-}10}$ perfluorohydrocarbon group having an etheric oxygen atom at an end thereof or in a carbon-carbon bond thereof.

Specific examples of the monomer represented by the general formula (2-1) include the following. Note that the description after the formula is the abbreviation of the compound. One kind thereof may be used singly or two or more kinds thereof may be used in combination.

$CF_2{=}CFO(CF_2)_2OCF{=}CF_2$

$CF_2{=}CFO(CF_2)_3OCF{=}CF_2$: C3DVE

$CF_2{=}CFO(CF_2)_4OCF{=}CF_2$: C4DVE

$CF_2{=}CFO(CF_2)_6OCF{=}CF_2$

$CF_2{=}CFO(CF_2)_8OCF{=}CF_2$

$CF_2{=}CFO(CF_2)_2OCF(CF_3)CF_2OCF{=}CF_2$

$CF_2{=}CFO(CF_2)_2O(CF(CF_3)CF_2O)_2CF{=}CF_2$

$CF_2{=}CFOCF_2O(CF_2CF_2O)_2CF{=}CF_2$

$CF_2{=}CFO(CF_2O)_3O(CF(CF_3)CF_2O)_2CF{=}CF_2$

$CF_2{=}CFOCF_2CF(CF_3)O(CF_2)_2OCF(CF_3)CF_2OCF{=}CF_2$

$CF_2{=}CFOCF_2CF_2O(CF_2O)_2CF_2CF_2OCF{=}CF_2$

The monomer represented by the following general formula (2-1) is preferably C3DVE or C4DVE from the viewpoint of better rubber properties when the fluorine-containing copolymer is made into a crosslinked rubber article.

$(CH_2{=}CH)_2R^{51}$ ... general formula (2-2)

In the general formula (2-2), $R^{51}$ represents a divalent $C_{2\text{-}10}$ perfluorohydrocarbon group or a divalent $C_{2\text{-}10}$ perfluorohydrocarbon group having an etheric oxygen atom at an end thereof or in a carbon-carbon bond thereof.

Specific examples of the monomer represented by the general formula (2-2) include the following. Note that the description after the formula is the abbreviation of the compound. One kind thereof may be used singly or two or more kinds thereof may be used in combination.

$CH_2{=}CH(CF_2)_2CH{=}CH_2$

$CH_2{=}CH(CF_2)_4CH{=}CH_2$: C4DV

$CH_2{=}CH(CF_2)_6CH{=}CH_2$: C6DV

The monomer represented by the general formula (2-2) is preferably C6DV.

The percentage of the fluorine-containing monomer-based unit having two or more polymerizable unsaturated bonds in all units constituting the fluorine-containing copolymer is not particularly limited, but from the viewpoint of heat resistance, the percentage is preferably 0.01 to 1.00 mol%, more preferably 0.02 to 0.50 mol%, and particularly preferably 0.03 to 0.30 mol%.

If the percentage of the fluorine-containing monomer-based unit having two or more polymerizable unsaturated bonds is the lower limit or more of the above range, the crosslinking reactivity is excellent and the crosslinked rubber article after crosslinking has better tensile strength and compression set under high temperature. If the value is the upper limit or less of the above-mentioned range, cracking can be reduced more while maintaining excellent physical properties as crosslinked rubber articles after crosslinking.

-Unit based on nitrile group-containing compound-

It is preferred that the fluorine-containing copolymer further comprises a unit based on a nitrile group-containing compound.

The unit based on a nitrile group-containing compound is a unit based on a nitrile group-containing monomer (hereinafter also referred to as "$R_{CN}$"). From the viewpoint of a better effect of the present invention, $R_{CN}$ preferably has a fluorine atom, and is more preferably a unit based on a monomer represented by the general formula (4):

$CR^{11}R^{12}=CR^{13}-R^{14}-CN$ ... general formula (4)

wherein in the general formula (4), $R^{11}$, $R^{12}$, and $R^{13}$ are each independently a hydrogen atom or a methyl group, and $R^{14}$ is a divalent $C_{1-10}$ perfluorohydrocarbon group or a divalent $C_{1-10}$ perfluorohydrocarbon group having an etheric oxygen atom at an end thereof or in a carbon-carbon bond thereof.

$R^{11}$, $R^{12}$, and $R^{13}$ are preferably fluorine atoms or hydrogen atoms from the viewpoint of excellent polymerization reactivity of $R_{CN}$, more preferably all fluorine atoms or all hydrogen atoms, and particularly preferably all fluorine atoms from the viewpoint of mold release performance and heat resistance of crosslinked rubber articles.

$R^{14}$ may be either linear, branched, or cyclic, and is preferably linear or branched. The number of carbon atoms in $R^{14}$ is not particularly limited, but from the viewpoint of reactivity and availability, the number is preferably from 2 to 8, more preferably from 3 to 7, still more preferably from 3 to 6, and particularly preferably from 3 to 5.

$R^{14}$ may or may not have an etheric oxygen atom, but preferably has an etheric oxygen atom from the viewpoint of better rubber properties.

The number of etheric oxygen atoms in $R^{14}$ is not particularly limited, but from the viewpoint of reactivity and availability, the number is preferably from 1 to 3 and more preferably 1 or 2.

Specific examples of the monomer represented by the general formula (4) include the following. Note that the description after the formula is the abbreviation of the compound. One kind of them may be used singly or two or more kinds thereof may be used in combination.

$CF_2=CFOCF_2CF(CF_3)OCF_2CF_2CN$: 8CNVE

$CF_2=CFO(CF_2)_5CN$: MV5CN

$CF_2=CFOCF_2CF_2CF_2OCF(CF_3)CN$

$CF_2=CFO(CF_2)_3CN$

Among these, 8CNVE and MV5CN are preferred due to their better mold release performance and heat resistance of crosslinked rubber articles.

The percentage of the unit based on a nitrile group-containing compound in all units constituting the fluorine-containing copolymer is not particularly limited, but from the viewpoint of crosslinking reactivity and heat resistance, the percentage is preferably 0.01 to 2.00 mol%, more preferably 0.05 to 1.00 mol%, and particularly preferably 0.10 to 0.50 mol%.

-Formula (5) unit-

The general formula (5) is as follows.

$CF_2=CF-O-R^{f4}$ ... general formula (5)

wherein in the general formula (5), $R^{f4}$ represents a $C_{1-8}$ perfluoroalkyl group containing an etheric oxygen atom. The

number of carbon atoms in $R^{f4}$ is preferably 1 to 7 and more preferably 1 to 6, from the viewpoint of excellent low-temperature properties.

Specific examples of the monomer represented by the general formula (5) include the following. Note that the description after the formula is the abbreviation of the compound. One kind thereof may be used singly or two or more kinds thereof may be used in combination.

$CF_2=CF-OCF_2CF_2-OCF_2-OCF_2-OCF_2-OCF_2-OCF_3$: C9PEVE

$CF_2=CF-OCF_2CF_2-OCF_2-OCF_2-OCF_3$: C7PEVE

$CF_2=CF-OCF_2CF_2-OCF_2CF_2-OCF_2CF_3$: EEAVE

$CF_2=CF-OCF_2-OCF_3$

$CF_2=CF-OCF_2-OCF_2CF_3$

$CF_2=CF-O(CF_2CF(CF_3)O)_2CF_2CF_2CF_3$

$CF_2=CF-OCF_2-OCF_2-OCF_3$

Among these, C9PEVE, C7PEVE, and EEAVE are preferred because of their superior low-temperature properties when the fluorine-containing copolymer is made into a crosslinked rubber article.

When the fluorine-containing copolymer has a formula (5) unit, the percentage of the formula (5) unit in all units constituting the fluorine-containing copolymer is not particularly limited, but from the viewpoint of superior low-temperature properties, the percentage is preferably 1 to 57 mol%, more preferably 2 to 30 mol%, and particularly preferably 2 to 20 mol%.

-Units based on monomers other than above-

The fluorine-containing copolymer may have a unit based on a monomer other than the above. Examples of the other monomer include another fluorine-containing monomer or a non-fluorinated monomer.

Examples of the other fluorine-containing monomer include vinyl fluoride; pentafluoropropylene; perfluorocyclobutene; $CH_2=CHCF_3$, $CH_2=CHCF_2CF_3$, $CH_2=CHCF_2CF_2CF_3$, $CH_2=CHCF_2CF_2CF_2CF_3$, $CH_2=CHCF_2CF_2CF_2CF_2CF_3$, and other (perfluoroalkyl)ethylenes; etc.

Specific examples of the non-fluorinated monomer include $\alpha$-olefins such as isobutylene and pentene; vinyl ethers such as methyl vinyl ether, ethyl vinyl ether, propyl vinyl ether, and butyl vinyl ether; vinyl esters such as vinyl acetate, vinyl propionate, vinyl butyrate, vinyl caproate, and vinyl caprylate; etc.

When the fluorine-containing copolymer has a unit based on a monomer other than the above, the content of the monomer based on a monomer other than the above in all units constituting the fluorine-containing copolymer is not particularly limited, but from the viewpoint of excellent heat resistance and chemical resistance, the content is preferably 0.001 to 2.00 mol%, more preferably 0.01 to 1.00 mol%, and particularly preferably 0.01 to 0.50 mol%.

The other monomer used may be a monomer having at least one of an iodine atom and a bromine atom. When the monomer having at least one of an iodine atom and a bromine atom is copolymerized, at least one of the iodine atom and the bromine atom can also be introduced into a side chain of the fluorine-containing copolymer.

Preferred examples of the monomer having at least one of an iodine atom and a bromine atom include a compound A represented by general formula (6) or a compound B represented by general formula (7):

$CR^{21}R^{22}=CR^{23}R^{24}$ ... general formula (6)

$CR^{21}R^{22}-R^{25}-CR^{23}R^{24}$ ... general formula (7)

provided that the compounds A and B have one or more bromine or iodine atoms.

In general formulas (6) and (7), $R^{21}$, $R^{22}$, and $R^{23}$ are each independently a hydrogen atom, a fluorine atom, a bromine atom, or an iodine atom.

$R^{24}$ in the general formulas (6) and (7) is an alkyl group, an alkyl group with etheric oxygen, a fluoroalkyl group, or a fluoroalkyl group with etheric oxygen. $R^{24}$ may have at least one of an iodine atom and a bromine atom. $R^{24}$ may be linear or branched.

$R^{25}$ in the general formula (7) is a group having one or more polymerizable unsaturated bonds. The polymerizable unsaturated bond may be bonded to an alkyl group, an alkyl group with etheric oxygen, a fluoroalkyl group, or a fluoroalkyl group with etheric oxygen. $R^{25}$ may have at least one of an iodine atom and a bromine atom. $R^{25}$ may be linear or branched.

Specific examples of the monomer having an iodine atom include iodoethylene, 4-iodo-3,3,4,4-tetrafluoro-1-butene, 2-iodo-1,1,2,2-tetrafluoro-1-vinyloxyethane, 2-iodoethyl vinyl ether, allyl iodide, 1,1,2,3,3,3,3-hexafluoro-2-iodo-1-(perfluorovinyloxy)propane, 3,3,4,5,5,5-hexafluoro-4-iodopentene, iodotrifluoroethylene, 2-iodoperfluoro(ethyl vinyl ether), $CF_2=CFOCF(CF_3)CF_2OCF_2CF_2CH_2I$, $CF_2=CFOCF_2CF_2CH_2I$, or $CH_2=CHCF_2CF_2I$. One kind of them may be used singly or two or more kinds thereof may be used in combination.

Specific examples of the monomers having a bromine atom include bromotrifluoroethylene, 4-bromo-3,3,4,4-tetrafluorobutene-1, vinyl bromide, 1-bromo-2,2-difluoroethylene, perfluoroallyl bromide, 4-bromo-1,1,2-trifluorobutene-1,4-bromo-1,1,3,3,4,4-hexafluorobutene, 4-bromo-3-chloro-1,1,3,4,4-pentafluorobutene, 6-bromo-5,5,6,6-tetrafluorohexene, 4-bromo-perfluorobutene-1, 3,3-difluoroallyl bromide, 2-bromo-perfluoroethyl perfluorovinyl ether, $CF_2=CFOCF_2CF_2CF_2OCF_2CF_2Br$, $CF_2BrCF_2O-CF=CF_2$, $CH_3OCF=CFBr$, or $CF_3CH_2OCF=CFBr$. One kind of them may be used singly or two or more kinds thereof may be used in combination.

Specific examples of the monomer having an iodine atom and a bromine atom include 3-bromo-4-iodo-perfluorobutene-1 or 2-bromo-4-iodo-perfluorobutene-1. One kind of them may be used singly or two or more kinds thereof may be used in combination.

The fluorine-containing copolymer preferably has at least one of an iodine atom and a bromine atom, and particularly preferably has at least one of an iodine atom and a bromine atom at an end of the fluorine-containing copolymer (polymer chain). Here, the end means both an end of the main chain and an end of a branched chain of the fluorine-containing copolymer.

Examples of the iodine atom and bromine atom include those derived from a compound that has at least one of an iodine atom and a bromine atom and functions as a chain transfer agent as described below, or those derived from a monomer having at least one of an iodine atom and a bromine atom as described above. Preferred are those derived from a compound that has at least one of an iodine atom and a bromine atom and functions as a chain transfer agent as described below.

The fluorine-containing copolymer may have at least one of an iodine atom and a bromine atom. In this case, the content of at least one of the iodine atom and the bromine atom based on the total mass of the fluorine-containing copolymer is not particularly limited, but from the viewpoint of better crosslinking reactivity of the fluorine-containing copolymer and better mechanical properties of crosslinked rubber articles, the content is preferably 0.01 to 5.00 mass%, more preferably 0.03 to 2.00 mass%, and particularly preferably 0.05 to 1.00 mass%.

When the fluorine-containing copolymer has at least one of an iodine atom and a bromine atom, the mass ratio of the content of at least one of the iodine atom and the bromine atom to the content of crosslinker in the fluorine-containing copolymer composition (content of at least one of the iodine atom and the bromine atom/content of crosslinker) is not particularly limited, but is preferably 0.01 to 0.50, more preferably 0.03 to 0.30, and particularly preferably 0.05 to 0.20. When the mass ratio is the lower limit or more of the above range, the crosslinking reaction can easily proceed, and when the mass ratio is the upper limit or less of the above range, the hardness is better.

When the fluorine-containing copolymer has at least one of an iodine atom and a bromine atom, the mass ratio of the content of at least one of the iodine atom and the bromine atom to the content of crosslinking aid in the fluorine-containing copolymer composition (content of at least one of the iodine atom and the bromine atom/content of crosslinking aid) is not particularly limited, but is preferably 0.01 to 0.50, more preferably 0.02 to 0.30, and particularly preferably 0.03 to 0.20. When the mass ratio is the lower limit or more of the above range, the cross-linking reaction can easily proceed, and when the mass ratio is the upper limit or less of the above range, the hardness is better.

<<Method for producing fluorine-containing copolymer>>

Examples of the method for producing a fluorine-containing copolymer include a method of copolymerizing the above monomer in the presence of a chain transfer agent and a radical polymerization initiator.

For details of the method for producing a fluorine-containing copolymer, see, for example, the methods described in paragraphs 0019-0034 of WO 2010/082633, paragraphs 0027-0048 of WO 2018/225586, paragraphs 0030-0033 of WO 2020/184427, or paragraphs 0035-0038 of WO 2021/210502.

(Chain transfer agent)

The chain transfer agent is preferably a compound having at least one of an iodine atom and a bromine atom.

When the monomer component is polymerized, a chain transfer agent having at least one of an iodine atom and a bromine atom may be present in the polymerization system. This can introduce at least one of the iodine atom and the bromine atom into the fluorine-containing copolymer. When the monomer component is polymerized in the presence of a

chain transfer agent, at least one of the iodine atom and the bromine atom can be introduced at an end of the main chain of the fluorine-containing copolymer.

Examples of the chain transfer agent having at least one of an iodine atom and a bromine atom include a compound C represented by general formula (8), a compound D represented by general formula (9), or a compound E represented by general formula (10):

$R^{f4}I_2$ ... general formula (8)

$R^{f5}IBr$ ... general formula (9)

$R^{f6}Br_2$ ... general formula (10)

wherein in the general formulas (8) to (10), $R^{f4}$, $R^{f5}$, and $R^{f6}$ are each independently a $C_{1-16}$ alkylene group, a fluoroalkylene group, or a backbone having an aromatic ring, and is preferably an alkylene group having 3 or more (preferably 3 to 8) carbon atoms or a perfluoroalkylene group.

The alkylene or fluoroalkylene group of $R^{f4}$, $R^{f5}$, and $R^{f6}$ may be linear or branched. $R^{f4}$, $R^{f5}$ and $R^{f6}$ are each preferably a perfluoroalkylene group.

Examples of the compound C represented by general formula (8) include 1,2-diiodoperfluoroethane, 1,3-diiodoperfluoropropane, 1,4-diiodoperfluorobutane, 1,5-diiodoperfluoropentane, 1,6-diiodoperfluorohexane, 1,8-diiodoperfluorooctane, 2-iodoperfluoropropane, 1,3-diiodo-2-chloroperfluoropropane, 1,5-diiodo-2,4-dichloroperfluoropentane, 1,12-diiodo-perfluorododecane, 1,16-diiodo-perfluorohexadecane, diiodomethane, 1,2-diiodoethane, 1,3-diiodopropane (1,3-diiodo-n-propane), 1,4-diiodo diiodobutane, 1,6-diiodohexane, 1,8-diiodooctane, or (2-iodoethyl)-substituted benzene. One kind of them may be used singly or two or more kinds thereof may be used in combination.

Among these, 1,4-diiodoperfluorobutane (C4DI) is preferred in terms of reactivity and availability.

Examples of the compound D represented by general formula (9) include 1-iodo-4-bromo-perfluorobutane, 1-iodo-6-bromo-perfluorohexane, 1-iodo-8-bromo-perfluoroctane, 1-bromo-2-iodo-perfluoroethane, 1-bromo-3-iodo-perfluoropropane, 2-bromo-3-iodo-perfluorobutane, 3-bromo-4-iodo-perfluorobutene-1, 2-bromo-4-iodo-perfluorobutene-1, monoiodo-monobromo-substituted benzene, or diiodo-monobromo-substituted benzene. One kind of them may be used singly or two or more kinds thereof may be used in combination.

Examples of the compound E represented by general formula (10) include $CF_2Br_2$, $BrCF_2CF_2Br$, $CF_3CFBrCF_2Br$, $CFClBr_2$, $BrCF_2CFClBr$, $CFBrClCFClBr$, $BrCF_2CF_2CF_2Br$, $BrCF_2CFBrOCF_3$, or (2-bromoethyl)-substituted benzene. One kind of them may be used singly or two or more kinds thereof may be used in combination.

<Crosslinker>

The crosslinker is used to cross-link a fluorine-containing copolymer, and examples thereof include an organic peroxide, amine, polyol, or triazine. One kind of them may be used singly or two or more kinds thereof may be used in combination.

Among these, an organic peroxide or an amine is preferred due to their superior crosslinking reactivity of the fluorine-containing copolymer, productivity of the crosslinked rubber article, heat resistance of the crosslinked rubber article, and chemical resistance of the crosslinked rubber article.

(Organic peroxide)

Examples of the organic peroxide include alkyl peroxides, benzoyl peroxide, *tert*-butyl peroxybenzene, 2,5-dimethylhexane-2,5 dihydroperoxide, 1,3-bis(*tert*-butylperoxyisopropyl)benzene, 2,5-dimethyl-2,5-di(benzoylperoxy) hexane, *tert*-butylperoxymaleate, *tert*-butylperoxyisopropylcarbonate, *tert*-butylcumylperoxide, dicumylperoxide, $\alpha,\alpha'$-bis(tert-butylperoxy)-p-diisopropylbenzene, $\alpha,\alpha'$-bis(*tert*-butylperoxy)-m-diisopropylbenzene, 2,5-dimethylhexane-2,5-dihydroxyperoxide, *tert*-butylperoxymaleate, or 2,5-dimethyl-2,5-di(*tert*-butylperoxy)-3-hexine. One kind of them may be used singly or two or more kinds thereof may be used in combination.

Among these, preferred is alkyl peroxides, $\alpha,\alpha'$-bis(*tert*-butylperoxy)-p-diisopropylbenzene, or $\alpha,\alpha'$-bis(*tert*-butylperoxy)-m-diisopropylbenzene.

Specific examples of alkyl peroxides include 1,1-di(*tert*-butylperoxy)-3,3,5-trimethylcyclohexane, di-*tert*-butyl peroxide, 2,5-dimethyl-2,5-di(*tert*-butylperoxy)hexane, or 1,1-di(*tert*-butylperoxy)-3,3,5-trimethylcyclohexane. One kind of them may be used singly or two or more kinds thereof may be used in combination.

Among these, 2,5-dimethyl-2,5-di(*tert*-butylperoxy)hexane is preferred.

If the fluorine-containing copolymer composition contains an organic peroxide and further contains a cross-linking aid as described below, the cross-linking efficiency is higher.

(Amine)

Examples of the amine include hexamethylenediamine, hexamethylenediamine carbamate, 2,2-bis[4-(4-aminophenoxy)phenyl]propane, 2,2-bis(3-amino-4-hydroxyphenyl)propane, 2,2-bis(3-amino-4-hydroxyphenyl)hexafluoropropane (hereinafter, also referred to as "BOAP"; also known as bisaminophenol AF), 2,2-bis(3,4-diaminophenyl) propane, 2,2-bis(3,4-diaminophenyl)hexafluoropropane, 2,2-bis(3-amino-4-(N-phenylamino)phenyl)hexafluoropropane, 4,4'-methylenedianiline, m-phenylenediamine, adipic dihydrazide, or a compound represented by formula (XII) of Japanese Patent No. 5833657. One kind of them may be used singly or two or more kinds thereof may be used in combination.

Among these, BOAP is preferred because of its superior effect of the present invention.

The content of the crosslinker based on the total mass of the fluorine-containing copolymer composition is not particularly limited, but the content is preferably 0.30 to 10.00 mass%, more preferably 0.30 to 5.00 mass%, and particularly preferably 0.50 to 3.00 mass%. If the amount of crosslinker blended is within the above range, the crosslinked rubber article has an excellent balance between the strength and the elongation.

<Crosslinking aid (co-crosslinker)>

The crosslinking aid is suitably used to improve the cross-linking efficiency when the fluorine-containing copolymer is cross-linked using an organic peroxide.

After the cross-linking reaction is completed, the crosslinking aid bonds to the fluorine-containing copolymer and becomes part of the cross-linked structure.

The crosslinking aid is preferably a compound having two or more reactive functional groups in the same molecule. Specific examples of the reactive functional group include a carbon-carbon double bond-containing group, a halogen atom, an acid anhydride residue, a carboxy group, an amino group, a cyano group, or a hydroxyl group. A plurality of reactive functional groups in the same molecule of a crosslinking aid may be the same or different from each other.

Specific examples of the carbon-carbon double bond-containing group include alkenyl groups such as a vinyl group, an allyl group, and a methallyl group; unsaturated acyl groups such as an acryloyl group and a methacryloyl group; and a maleimide group. The carbon-carbon double bond-containing group is preferably a $C_{2-4}$ alkenyl group, and more preferably an allyl group.

Specific examples of the crosslinking aid include a compound represented by the following general formula (11), triallyl cyanurate, triallyl isocyanurate, trimethallyl isocyanurate, 1,3,5-triacryloylhexahydro-1,3,5-triazine, triallyltrimellitate, m-phenylenediamine bismaleimide, p-quinone dioxime, p,p'-dibenzoylquinone dioxime, dipropargylic terephthalate, diallyl phthalate, N,N',N",N"- tetraallyl terephthalamide, or a vinyl group-containing siloxane oligomer (e.g., polymethylvinylsiloxane, polymethylphenylvinylsiloxane). One kind of them may be used singly or two or more kinds thereof may be used in combination.

Among them, a compound represented by the following general formula (11), triallylcyanurate, triallylisocyanurate, or trimethallylisocyanurate is preferred from the viewpoint of superior crosslinking reactivity. More preferred is a compound represented by the following general formula (11) or triallylisocyanurate. Particularly preferred is a compound represented by the following general formula (11).

The general formula (11) is as follows:

$$(CR^{61}R^{62}\text{-}CR^{63})_2R^{64} \quad ... \qquad \text{general formula (11)}$$

wherein in the general formula (11), $R^{61}$, $R^{62}$, and $R^{63}$ are each independently a hydrogen atom, a fluorine atom, a $C_{1-5}$ alkyl group, or a $C_{1-5}$ fluoroalkyl group, and $R^{64}$ is a divalent $C_{1-18}$ fluorohydrocarbon group or a divalent $C_{1-18}$ fluorohydrocarbon group having an etheric oxygen atom at an end thereof or in a carbon-carbon bond thereof. The plurality of $R^{61}$, the plurality of $R^{62}$, and the plurality of $R^{63}$ may be each independently the same or different.

When $R^{61}$, $R^{62}$, and $R^{63}$ are alkyl or fluoroalkyl groups, they may be linear or branched, but are preferably linear.

When $R^{61}$, $R^{62}$, and $R^{63}$ are alkyl or fluoroalkyl groups, the number of carbon atoms is not particularly limited, but is preferably 1 to 5, more preferably 1 to 3, and particularly preferably 1 or 2.

$R^{61}$, $R^{62}$, and $R^{63}$ are preferably all hydrogen atoms because of their superior crosslinking reactivity.

The fluorohydrocarbon group in $R^{64}$ is preferably a perfluorohydrocarbon group because of superior heat resistance of the crosslinked rubber article.

$R^{64}$ may be linear, branched, or cyclic, and is preferably linear or branched and more preferably linear. The number of carbon atoms in $R^{64}$ is not particularly limited, but is preferably from 1 to 18, more preferably from 2 to 8, and particularly preferably from 3 to 7.

When $R^{64}$ has an etheric oxygen atom, the number of etheric oxygen atoms in $R^{64}$ is not particularly limited, but the number is preferably from 1 to 6, more preferably 1 to 3, and particularly preferably 1 or 2. When $R^{64}$ has an etheric

oxygen atom, the etheric oxygen atom should be present at an end of $R^{64}$.

The compound represented by the general formula (11) is not particularly limited, but from heat resistance and chemical resistance, the compound is preferably C3DVE, C4DVE, $CH_2=CH(CF_2)_2CH=CH_2$, C4DV, or C6DV, and more preferably C6DV.

The content of the crosslinking aid based on 100.00 parts by mass of the fluorine-containing copolymer in the fluorine-containing copolymer composition is not particularly limited, but the content is preferably 0.10 to 10.00 parts by mass, more preferably 0.50 to 5.00 parts by mass, and particularly preferably 1.00 to 2.50 parts by mass.

If the amount of crosslinking aid blended is within the above range, the crosslinked rubber article has an excellent balance between the strength and the elongation.

In the fluorine-containing copolymer composition, the mass ratio of the crosslinker content to the crosslinking aid content (crosslinker content/crosslinking aid content) is not particularly limited, but is preferably from 0.2 to 7.0, more preferably from 0.4 to 5.0, particularly preferably from 0.5 to 2.0 from the viewpoint that an unreacted crosslinking aid hardly remains and the crosslinking reaction proceeds well.

The total content of the crosslinker and the crosslinking aid based on 100.00 parts by mass of the fluorine-containing copolymer in the fluorine-containing copolymer composition is not particularly limited, but the total content is preferably 5.00 parts by mass or less, more preferably 4.00 parts by mass or less, and particularly preferably 3.00 parts by mass or less from the viewpoint that the crosslinking reaction proceeds well.

The total content of the crosslinker and the crosslinking aid based on 100.00 parts by mass of the fluorine-containing copolymer in the fluorine-containing copolymer composition is not particularly limited, but the total content is preferably 0.10 parts by mass or more, more preferably 0.50 parts by mass or more, and particularly preferably 0.80 parts by mass or more from the viewpoint that the crosslinked rubber article has a better hardness.

The content of the crosslinking aid based on the total mass of the fluorine-containing copolymer composition is not particularly limited, but from the viewpoint of heat resistance and chemical resistance, the content is preferably 0.30 to 10.00 mass%, more preferably 0.30 to 5.00 mass%, and particularly preferably 0.50 to 3.00 mass%.

<Additional components>

The fluorine-containing copolymer composition may contain an additional component(s) other than those listed above as long as the effects of the present invention are not impaired. Examples of the additional component include a processing aid (e.g., an fatty acid ester (e.g., glycerol monooleate), a fatty acid metal salt (e.g., sodium stearate, calcium stearate), an acid acceptor such as a divalent metal oxide (e.g., magnesium oxide, calcium oxide, zinc oxide, lead oxide), synthetic wax (e.g., polyethylene wax), a filler and a reinforcing agent (e.g., carbon black, barium sulfate, calcium metasilicate, calcium carbonate, titanium oxide, silicon dioxide, aromatic polyester, polyamide-imide, thermoplastic polyimide, clays, talc, a fluorine-containing copolymer, mentioned below, except the fluorine-containing copolymers mentioned above (hereinafter also referred to as a "specific fluorine-containing copolymer")), a vulcanizing agent, a scorch retardant (e.g., phenolic hydroxyl group-containing compounds such as bisphenol A, quinones such as hydroquinone, $\alpha$-methylstyrene dimers such as 2,4-di(3-isopropylphenyl)-4-methyl-1-pentene), crown ether (e.g., 18-crown-6), or a pigment.

(Specific fluorine-containing copolymer)

The specific fluorine-containing copolymer is preferably those that have a melting point.

The melt flow rate (hereinafter, referred to as "MFR") at a temperature 20°C or more higher than the melting point of the specific fluorine-containing copolymer (372°C is usually adopted) is not particularly limited, but is preferably 0.1 to 1000 g/10 min, more preferably 0.5 to 100 g/10 min, still more preferably 1 to 30 g/10 min, and particularly preferably 5 to 20 g/10 min.

The specific fluorine-containing copolymer preferably has a TFE unit.

The percentage of the TFE unit in all units constituting the specific fluorine-containing copolymer is not particularly limited, but from the viewpoint of heat resistance and chemical resistance, the percentage is preferably more than 90 mol% and 100 mol% or less, more preferably 95 to 99 mol%, and particularly preferably 96 to 98 mol%.

Examples of the specific fluorine-containing copolymer include the "fluorine-containing copolymer (X1-1)" in the Examples section of WO 2016/017801.

The content of the components, other than the fluorine-containing copolymer, based on 100.00 parts by mass of the fluorine-containing copolymer in the fluorine-containing copolymer composition is not particularly limited, but the content is preferably 0.50 to 50.00 parts by mass, more preferably 1.00 to 40.00 parts by mass, and particularly preferably 2.00 to 30.00 parts by mass. If the content is the lower limit or more of the above range, the hardness of the crosslinked rubber article is better, and if the content is the upper limit or less of the above range, the transparency of the crosslinked rubber article is better.

The content of the additional components based on the total mass of the fluorine-containing copolymer composition is not particularly limited, but from the viewpoint of heat resistance and chemical resistance, the content is preferably 0.50 to 33.33 mass%, more preferably 0.99 to 28.57 mass%, and particularly preferably 1.96 to 23.08 mass%.

Examples of a method for preparing the fluorine-containing copolymer composition includes a method of mixing the above-described respective components. Mixing of each component is achieved by kneading the fluorine-containing copolymer, imidazole compound, crosslinker, crosslinking aid, if necessary, and other additives by a kneading method using a known rubber-use mixing apparatus such as two rolls, a kneader, a Banbury mixer, or an extruder.

In addition, after the above respective components are mixed to prepare a mixture, the mixture may be molded. In other words, the fluorine-containing copolymer composition may be a molded product. Specific examples of the method of molding a mixture include compression molding, injection molding, extrusion molding, calendering, or molding by dipping or coating, after dissolution in a solvent.

[Crosslinked rubber article]

The crosslinked rubber article of the present invention is a rubber article produced by cross-linking a fluorine-containing copolymer in the fluorine-containing copolymer composition according to the present invention.

<Method for producing crosslinked rubber article>

The crosslinked rubber article is produced by cross-linking a fluorine-containing copolymer in the fluorine-containing copolymer composition.

Examples of the method of cross-linking a fluorine-containing copolymer in the fluorine-containing copolymer composition include a method of cross-linking the fluorine-containing copolymer composition by heating, or a method including irradiating the fluorine-containing copolymer composition with ionizing radiation.

Specific examples of the heating-mediated cross-linking method include heat press cross-linking, steam cross-linking, or hot air cross-linking. From among these methods, one can select the appropriate one in consideration of the shape and use of the fluorine-containing copolymer composition.

Examples of the molding method include injection molding, extrusion molding, coextrusion molding, blow molding, compression molding, inflation molding, transfer molding, or calender molding.

Examples of the extrusion molding include (i) a method including applying a suspension solution prepared by suspending and dispersing, in a suitable solvent, a fluorine-containing copolymer or a fluorine-containing copolymer composition and drying the solution to form a coating film, or (ii) a method including extruding a fluorine-containing copolymer or a fluorine-containing copolymer composition, and forming it into a hose or electric wire shape.

When the fluorine-containing copolymer composition contains an organic peroxide as a crosslinker, cross-linking by heating is preferred.

Examples of a specific method for producing a crosslinked rubber article by heat crosslinking include a heat press molding method. In the heat press molding method, a heated mold is used to fill a cavity of the mold having a desired shape with the fluorine-containing copolymer composition, which is then heated to simultaneously mold and cross-link (heat press crosslinking) the composition to produce a crosslinked rubber article.

The heating temperature is not particularly limited, but is preferably 100 to 400°C, more preferably 130 to 220°C, still more preferably 140 to 200°C, and particularly preferably 150 to 180°C. The heating time is not particularly limited, but is preferably from 1 second to 24 hours, more preferably from 1 minute to 1 hour, and particularly preferably from 5 minutes to 40 minutes.

When the heat press molding method is used, a crosslinked rubber article obtained by heat press cross-linking (also referred to as primary cross-linking) is preferably further heated in, for instance, an oven using electricity, hot-air, steam, etc., as a heat source, so that the crosslinking (also referred to as secondary cross-linking) proceeds.

The temperature during secondary cross-linking is not particularly limited, but is preferably 80 to 350°C, more preferably 150 to 280°C, still more preferably 180 to 260°C, and particularly preferably 200 to 250°C. The secondary cross-linking time is not particularly limited, but is preferably from 30 minutes to 48 hours, more preferably from 1 hour to 48 hours, and particularly preferably from 4 hours to 24 hours. Sufficient secondary cross-linking improves the rubber properties (mechanical properties, compression set, and other properties) of the resulting crosslinked rubber article. In addition, peroxide residues contained in the crosslinked rubber article are decomposed and volatilized, and are thus decreased. The heat press molding method is preferably applied to the molding of sealing materials and the like.

Ionizing radiation in the method of irradiation with ionizing radiation includes electron beams, ultraviolet rays, $\gamma$-rays, etc. In the case of cross-linking by irradiation with ionizing radiation, the preferred method is to mold, in advance, a fluorine-containing copolymer or a fluorine-containing copolymer composition into a desired shape and then irradiating and crosslinking it with ionizing radiation.

The dose of ionizing radiation should be set appropriately, and is preferably from 1 to 300 kGy and more

preferably from 10 to 200 kGy.

<Physical properties>

The tensile strength of the crosslinked rubber article is not particularly limited, but from the viewpoint of better rubber properties of the crosslinked rubber article, is preferably 1 to 50 MPa, more preferably 10 to 40 MPa, and particularly preferably 15 to 40 MPa.

The tensile elongation of the crosslinked rubber article is not particularly limited, but from the viewpoint of excellent rubber properties, is preferably 100 to 1000%, more preferably 150 to 600%, still more preferably 150 to 500%, and particularly preferably 150 to 400%.

The tensile strength and tensile elongation of the crosslinked rubber article are measured by the procedures described in the Examples section below.

The hardness (Shore-A) of the crosslinked rubber article is not particularly limited, but from the viewpoint of excellent rubber properties, is preferably 55 to 100, more preferably 55 to 90, still more preferably 60 to 85, and particularly preferably 65 to 80.

The hardness (Shore-A) of the crosslinked rubber article is measured by the procedure described in the Examples section below.

The compression set of the crosslinked rubber article at 250°C or 300°C for 70 hours is not particularly limited, but is preferably 70% or less, more preferably 50% or less, and particularly preferably 40% or less, because the fluorine-containing copolymer is well crosslinked and the shape recovery of the crosslinked rubber article after pressurization is better.

The compression set of the crosslinked rubber article at 250°C or 300°C for 70 hours is measured by the procedure described in the Examples section below.

<Applications>

The crosslinked rubber article is suitable for materials such as O-rings, seats, gaskets, oil seals, diaphragms, or V-rings. The crosslinked rubber article is also applicable to applications such as parts for semiconductor manufacturing equipment, heat-resistant and chemical-resistant sealing materials, heat-resistant and oil-resistant sealing materials, electric wire coating materials, sealing materials for liquid crystal display panel manufacturing equipment, sealing materials for light emitting diode manufacturing equipment, corrosionresistant rubber paints, sealing materials for urea-resistant grease, rubber paints, adhesive rubbers, hoses, tubes, calender sheets (rolls), sponges, rubber rolls, oil drilling parts, heat dissipating sheets, solution cross-linked materials, rubber sponges, bearing seals (e.g., urea-resistant grease), linings (chemical-resistant), automotive insulation sheets, insulating sheets for electronic equipment, rubber bands for watches, (amine-resistant) packings for endoscopes, bellows hoses (processed from a calender sheet), packings/valves for water heaters, fenders (marine engineering, ships), fibers/non-woven fabrics (e.g., protective clothing), base sealing materials, rubber gloves, stators of uniaxial eccentric screw pumps, parts for urea-SCR systems, anti-vibration agents, damping agents, sealants, additives for other materials, and/or toys.

Examples of the parts for semiconductor manufacturing equipment using the crosslinked rubber article include sealing materials (e.g., O-rings, square rings, gaskets, packings, oil seals, bearing seals, lip seals), tubes, hoses, various rubber rolls, diaphragms, linings, and others.

Examples of the semiconductor manufacturing equipment includes etching equipment (e.g., dry etching equipment, plasma etching equipment, reactive ion etching equipment, reactive ion beam etching equipment, sputter etching equipment, ion beam etching equipment, wet etching equipment, ashing equipment), cleaning equipment (dry etching cleaning equipment, UV/$O_3$ cleaning equipment, ion beam cleaning equipment, laser beam cleaning equipment, plasma cleaning equipment, gas etching cleaning equipment, extraction cleaning equipment, Soxhlet extraction cleaning equipment, high-temperature and high-pressure extraction cleaning equipment, microwave extraction cleaning equipment, supercritical extraction cleaning equipment), exposure equipment (e.g., steppers, coaters/developers), polishing equipment (e.g., CMP equipment), film deposition equipment (e.g., CVD equipment, sputtering equipment), and diffusion/ion implantation equipment (e.g., oxidation diffusion equipment, ion implantation equipment).

Examples

Hereinafter, the present invention will be described more specifically with reference to Examples. However, the present invention is not limited by the following Examples, and various modifications are possible without departing from the gist of the present invention.

Examples 1, 3, 5 and 7 are Examples of the present invention, and Examples 2, 4, 6 and 8 are Comparative Examples.

<To measure composition of fluorine-containing copolymer>

The content (mol%) of each unit in the fluorine-containing copolymer 1 or fluorine-containing copolymer 2 was calculated by nuclear magnetic resonance (NMR) analysis. The content of iodine atom in the copolymer was calculated using an apparatus in which an automatic sample combustion device, namely a pretreatment device for ion chromatography, (model AQF-100; manufactured by Mitsubishi Chemical Analytech Co., Ltd.) and an ion chromatograph were combined.

The content (mol%) of each unit in the fluorine-containing copolymer A was calculated by molten-state nuclear magnetic resonance (NMR) analysis and fluorine content analysis. However, the content of unit based on 5-norbornene-2,3-dicarboxylic anhydride (also known as "hymic anhydride"; hereafter referred to as "NAH") was calculated by the following infrared absorption spectroscopy.

(Infrared absorption spectroscopy)

The fluorine-containing copolymer A was press-formed to obtain a 200 μm film. In the infrared absorption spectra, the absorption peaks of the unit based on NAH in the fluorine-containing copolymer A all appear at 1778 $cm^{-1}$. The absorbance of the absorption peak was measured and the molar absorption coefficient of NAH, 20810 $mol^{-1} \cdot L \cdot cm^{-1}$, was used to determine the percentage of the unit based on NAH in the fluorine-containing copolymer A.

[Compounds used]

Abbreviations of the various compounds used are explained below.

·TFE: Tetrafluoroethylene
·PMVE: $CF_2$=$CFOCF_3$: Perfluoro(methyl vinyl ether)
·C4DI: 1,4-Diiodo-perfluorobutane
·8CNVE: ($CF_2$=$CFOCF_2CF(CF_3)OCF_2CF_2CN$)
·C3DVE: $CF_2$=$CFO(CF_2)_3OCF$=$CF_2$
·Organic peroxide (crosslinker) P25B: 2,5-Dimethyl-2,5-bis(*tert*-butylperoxy)hexane; "PERHEXA (registered trademark) 25B", manufactured by NOF CORPORATION
-Crosslinking aid (Co-crosslinker) C6DV: 1,6-Divinyl(perfluorohexane), manufactured by Tosoh Finechem Corporation
·Polyamine compound (crosslinker) BOAP: 2,2-Bis(3-amino-4-hydroxyphenyl)hexafluoropropane, manufactured by TOKYO CHEMICAL INDUSTRY CO., LTD.
·2E4MZ: 2-Ethyl-4-methylimidazole, manufactured by SHIKOKU CHEMICALS CORPORATION
·Specific fluorine-containing copolymer A (filler): the "fluorine-containing copolymer (X1-1)" in the Examples section of WO 2016/017801 was used as "specific fluorine-containing copolymer A". The molar ratio of each unit in the fluorine-containing copolymer A was NAH unit : TFE unit : PPVE unit = 0.1 : 97.9 : 2.0.

The fluorine-containing copolymer A is a resin particle with an average particle diameter (D50) of 2 to 3 μm.

·$C_2F_5OCF_2CF_2OCF_2COONH_4$

-Disodium hydrogen phosphate dodecahydrate

[To produce fluorine-containing copolymer]

Fluorine-containing copolymers 1 and 2 were produced as shown below.

<Fluorine-containing copolymer 1>

The fluorine-containing copolymer 1 was obtained by substantially the same production method as for "Copolymer 1" in the Examples in WO 2020/184427. The molar ratio of each unit in the fluorine-containing copolymer 1 obtained was TFE unit: PMVE unit : C3DVE unit = 71.40 : 28.43 : 0.17. The content of iodine atoms in the fluorine-containing copolymer 1 was 0.10 mass%.

<Fluorine-containing copolymer 2>

The fluorine-containing copolymer 2 was obtained by substantially the same production method as for "Copolymer (A-1)" in the Examples in WO 2021/210502. The content (molar ratio) of each unit in the fluorine-containing copolymer 2 obtained was TFE unit : PMVE unit : 8CNVE unit = 70.9 : 28.6 : 0.5.

[Examples 1 to 8]

The components listed in Table 1 were blended at the blending ratios shown in Table 1 and kneaded using two rolls at room temperature for 10 minutes to prepare a mixed fluorine-containing copolymer composition.

Each fluorine-containing copolymer composition obtained was heat-pressed under the following conditions (primary cross-linking) to produce a crosslinked rubber sheet with a thickness of 1 mm. The primary cross-linking of Examples 1, 2, 5 and 6 were all performed by heat pressing at 170°C for 10 minutes. The primary cross-linking of Examples 3, 4, 7, and 8 were all performed by heat pressing at 170°C for 10 minutes and 180°C for 20 minutes.

The crosslinked rubber was then heated in an oven under the following conditions (secondary cross-linking). Secondary cross-linking of Examples 1, 2, 5 and 6 were all performed by heating at 250°C for 4 hours under an air atmosphere. Secondary cross-linking of Examples 3, 4, 7 and 8 were all performed by heating at 90°C for 3 hours under a nitrogen atmosphere, followed by increasing the temperature to 305°C over 5 hours and further heating at 305°C for 13 hours. The crosslinked rubber was then cooled to room temperature to produce the crosslinked rubber article of each of Examples 1 to 8.

Each crosslinked rubber article obtained was used to measure the physical properties described below. Table 1 shows the measured results.

[Hardness]

The hardness (Shore-A) of each crosslinked rubber test piece was measured using a Type A durometer in accordance with JIS K 6253-3:2012. Table 1 shows the measured results.

Note that an automatic hardness tester for rubber (Digitest·Shore A, manufactured by H Barleys) was used as the measuring instrument.

Here, the test was conducted using three test pieces, and the arithmetic mean of the values obtained by measuring the three test pieces was recorded.

[Tensile strength and tensile elongation]

The tensile strength and tensile elongation were measured in accordance with JIS K6251:2010 by using test pieces of sheet-shaped crosslinked rubber (thickness: 1 mm) as prepared by being punched out with a No. 4 dumbbell. Table 1 shows the measured results.

Note that a tensile tester with data processing (Quick Reader TS-2530, manufactured by Ueshima Seisakusho Co., Ltd.) was used as the measuring instrument.

Here, the test was conducted using the respective three test pieces, and the arithmetic mean of the values obtained by measuring the three test pieces was recorded.

[Compression set]

In accordance with JIS K 6262:2013, the compression set (%) of each crosslinked rubber test piece was measured after holding it at 250°C or 300°C for 70 hours. Note that each P26 O-ring test piece was prepared in accordance with JIS B 2401-1:2012 and used as a test piece. The test was conducted using two test pieces, and the arithmetic mean of the values obtained by measuring the two test pieces was used. Table 1 shows the results.

The compression set was calculated using the formula below. Note that the closer the compression set is to 0%, the better.

Compression set (%) = (Original thickness of test piece - Thickness at 30 minutes after removal of test piece from compression apparatus)/(Original thickness of test piece - Thickness of spacer) $\times$ 100.

[Adhesiveness]

An O-ring prepared as a test piece of crosslinked rubber was sandwiched between two 5-cm square aluminum plates, heated at 200°C for 24 hours under 25% compression, and cooled at room temperature for 1.5 hours. The

maximum load (kgf) was then measured when the two aluminum plates were pulled at a speed of 5 mm/min. Note that each P26 O-ring test piece was prepared in accordance with JIS B 2401-1:2012 and used as a test piece. Table 1 shows the measured results.

[Table 1]

Table 1

| | | | Example 1 | Example 2 | Example 3 | Example 4 | Example 5 | Example 6 | Example 7 | Example 8 |
|---|---|---|---|---|---|---|---|---|---|---|
| Fluorine-containing copolymer 1 | | parts by mass | 100.00 | 100.00 | - | - | 100.00 | 100.00 | - | - |
| Fluorine-containing copolymer 2 | | | - | - | 100.00 | 100.00 | - | - | 100.00 | 100.00 |
| Fluorine-containing copolymer A (filler) | | | - | - | 20.00 | 20.00 | - | - | 20.00 | 20.00 |
| Crosslinker | Organic peroxide P25B | | 1.00 | 1.00 | - | - | 1.00 | 1.00 | - | - |
| | Polyamine compound BOAP | | - | - | 1.00 | 1.00 | - | - | 1.00 | 1.00 |
| Crosslinking aid | Co-crosslinker C6DV | | 2.00 | 2.00 | - | - | 2.00 | 2.00 | - | - |
| Imidazole compound | 2E4MZ | | 0.30 | - | 0.30 | - | 0.60 | 1.00 | 0.60 | 1.00 |
| Hardness | | - | 69 | 70 | 76 | 76 | 69 | 71 | 77 | 78 |
| Tensile strength | | MPa | 30.1 | 31.6 | 17.3 | 17.5 | 29.8 | 28.7 | 17.2 | 16.5 |
| Tensile elongation | | % | 216 | 207 | 166 | 207 | 214 | 209 | 154 | 151 |
| Compression set (CS) | 250°C/70hr | % | 38 | 32 | - | - | 37 | 42 | - | - |
| | 300°C/70hr | % | - | - | 30 | 30 | - | - | 28 | 29 |
| Adhesion strength evaluation | | kgf | 31 | 41 | 15 | 25 | 33 | 46 | 18 | 27 |

The results shown in Table 1 have demonstrated that the fluorine-containing copolymer composition of the present invention can be used to produce a crosslinked rubber article with improved adhesiveness (reduced adhesion strength).

In detail, the adhesion strength of the O-ring of Example 1 or 5 as produced with the fluorine-containing copolymer 1 is lower than that of the O-ring of Example 2 or 6, respectively, as produced with the fluorine-containing copolymer 1. In addition, the adhesion strength of the O-ring of Example 3 or 7 as produced with the fluorine-containing copolymer 2 is lower than that of the O-ring of Example 4 or 8, respectively, as produced with the fluorine-containing copolymer 2.

Note that comparisons were made within a group (a group consisting of Example 1, Example 2, Example 5, and Example 6, or a group consisting of Example 3, Example 4, Example 7, and Example 8) in which the same type of fluorine-containing copolymer was used.

## Claims

1. A fluorine-containing copolymer composition comprising a fluorine-containing copolymer, an imidazole compound having an imidazole backbone, and a crosslinker, wherein
the imidazole compound has a content of 0.80 parts by mass or less based on 100.00 parts by mass of the fluorine-containing copolymer.

2. The fluorine-containing copolymer composition according to claim 1, wherein the imidazole compound has a content of 0.30 parts by mass or less based on 100.00 parts by mass of the fluorine-containing copolymer.

3. The fluorine-containing copolymer composition according to claim 1, wherein the imidazole compound is liquid or solid at 25°C and the solid imidazole compound has a melting point of 180°C or lower.

4. The fluorine-containing copolymer composition according to claim 1, wherein the imidazole compound is represented by the following general formula (1):

[Chem.1]

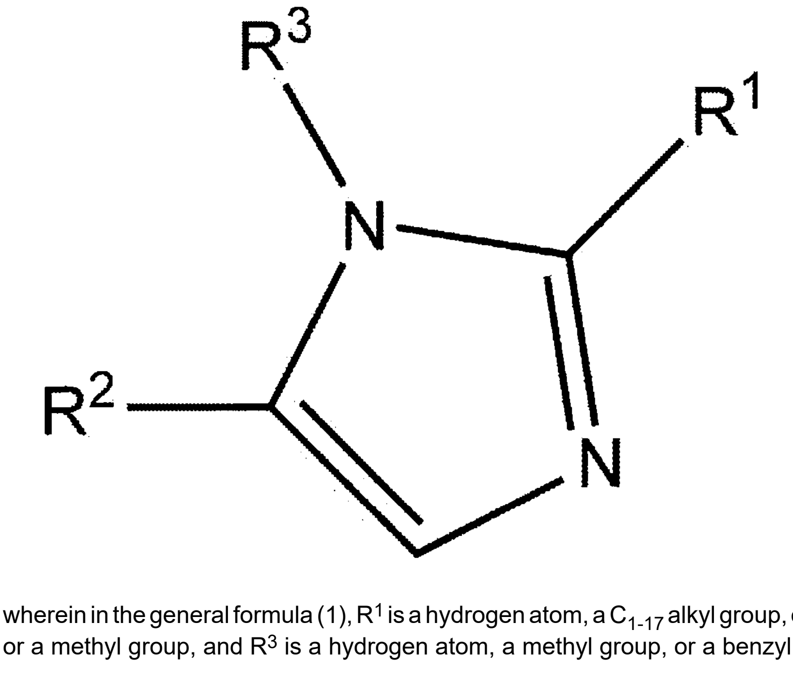

general formula (1)

wherein in the general formula (1), $R^1$ is a hydrogen atom, a $C_{1-17}$ alkyl group, or a phenyl group, $R^2$ is a hydrogen atom or a methyl group, and $R^3$ is a hydrogen atom, a methyl group, or a benzyl group.

5. The fluorine-containing copolymer composition according to claim 1, wherein the fluorine-containing copolymer comprises a tetrafluoroethylene (TFE)-based unit and a perfluoroalkylvinylether (PAVE)-based unit or comprises a vinylidene fluoride (VdF)-based unit.

6. The fluorine-containing copolymer composition according to claim 5, wherein the fluorine-containing copolymer

comprises a tetrafluoroethylene (TFE)-based unit and a perfluoroalkylvinylether (PAVE)-based unit.

**7.** The fluorine-containing copolymer composition according to claim 5, wherein the fluorine-containing copolymer further comprises a fluorine-containing monomer-based unit having two or more polymerizable unsaturated bonds.

**8.** The fluorine-containing copolymer composition according to claim 7, wherein the fluorine-containing monomer-based unit having two or more polymerizable unsaturated bonds is a unit based on a compound represented by the following general formula (2):

$(CR^{31}R^{32}=CR^{33})_{a3}R^{34}$ ... general formula (2)

wherein in the general formula (2), $R^{31}$, $R^{32}$, and $R^{33}$ are each independently a hydrogen atom, a fluorine atom, a methyl group, or a trifluoromethyl group, $R^{34}$ is an a3-valent $C_{1-10}$ perfluorohydrocarbon group or an a3-valent $C_{1-10}$ perfluorohydrocarbon group having an etheric oxygen atom at an end thereof or in a carbon-carbon bond thereof, and a3 represents an integer of 2 to 6, wherein a plurality of $R^{31}$ moieties, a plurality of $R^{32}$ moieties, and a plurality of $R^{33}$ moieties are each the same or different.

**9.** The fluorine-containing copolymer composition according to claim 5, wherein the fluorine-containing copolymer further comprises at least one of an iodine atom and a bromine atom.

**10.** The fluorine-containing copolymer composition according to claim 5, wherein the fluorine-containing copolymer further comprises a unit based on a nitrile group-containing compound.

**11.** **12.** A crosslinked rubber article produced by cross-linking a fluorine-containing copolymer in the fluorine-containing copolymer composition according to any one of claims 1 to 10.

## INTERNATIONAL SEARCH REPORT

International application No. **PCT/JP2024/013879**

### A. CLASSIFICATION OF SUBJECT MATTER

***C08L 27/14***(2006.01)i; ***C08F 214/18***(2006.01)i; ***C08K 5/3445***(2006.01)i
FI: C08L27/14; C08F214/18; C08K5/3445

According to International Patent Classification (IPC) or to both national classification and IPC

### B. FIELDS SEARCHED

Minimum documentation searched (classification system followed by classification symbols)

C08K3/00-13/08; C08L1/00-101/14; C08F6/00-246/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | WO 2020/204082 A1 (AGC INC.) 08 October 2020 (2020-10-08) claims 1-13, paragraphs [0009], [0014], [0016], [0027], [0068], [0082], example 13, table 3 | 1-9, 11 |
| Y | | 5-10 |
| X | JP 01-299859 A (JAPAN SYNTHETIC RUBBER CO., LTD.) 04 December 1989 (1989-12-04) claims 1-2, p. 2, lower left column, line 6 to lower right column, line 8, p. 7, upper right column, line 11 to lower left column, line 19, example 15, comparative example 9, tables 1, 2 | 1-5, 9, 11 |
| Y | | 5-10 |
| X | JP 2019-085475 A (MITSUBISHI CABLE IND LTD.) 06 June 2019 (2019-06-06) claims 1-5, paragraph [0012], examples 10-11, table 2 | 1-3, 5-6, 9, 11 |
| Y | | 5-10 |
| A | | 4 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/013879

C. DOCUMENTS CONSIDERED TO BE RELEVANT

| Category* | Citation of document, with indication, where appropriate, of the relevant passages | Relevant to claim No. |
|---|---|---|
| X | JP 2019-056092 A (TATSUTA ELECTRIC WIRE & CABLE CO., LTD.) 11 April 2019 (2019-04-11)<br>claims 1-8, paragraph [0023], example 2 | 1-3, 5,11 |
| Y | | 5-10 |
| A | | 4 |
| X | JP 50-046753 A (DAIKIN INDUSTRIES, LTD.) 25 April 1975 (1975-04-25)<br>claims, p. 2, lower left column, line 19 to lower right column, line 14, p. 4, lower right column, lines 10-19, example 6, table 3 | 1-3, 5, 11 |
| Y | | 5-10 |
| A | | 4 |
| Y | WO 2020/184427 A1 (AGC INC.) 17 September 2020 (2020-09-17)<br>claims 1-2, 7, examples | 5-10 |
| A | | 1-4, 11 |
| Y | WO 2021/210502 A1 (AGC INC.) 21 October 2021 (2021-10-21)<br>claims 1-2, examples | 5-10 |
| A | | 1-4, 11 |
| Y | JP 2004-500459 A (DUPONT DOW ELASTOMERS L.L.C.) 08 January 2004 (2004-01-08)<br>claims 1, 8, examples | 5-10 |
| A | | 1-4, 11 |

Form PCT/ISA/210 (second sheet) (July 2022)

**INTERNATIONAL SEARCH REPORT**
**Information on patent family members**

International application No.
**PCT/JP2024/013879**

| Patent document cited in search report | Publication date (day/month/year) | Patent family member(s) | Publication date (day/month/year) |
|---|---|---|---|
| WO 2020/204082 A1 | 08 October 2020 | CN 113646362 A<br>claims 1-13, paragraphs [0036], [0046], [0048]-[0050], [0071]-[0074], [0148]-[0150], [0177]-[0178], example 13, table 3<br>KR 10-2021-0150359 A<br>TW 202104415 A | |
| JP 01-299859 A | 04 December 1989 | (Family: none) | |
| JP 2019-085475 A | 06 June 2019 | (Family: none) | |
| JP 2019-056092 A | 11 April 2019 | CN 109819655 A<br>claims 1-8, paragraph [0023], example 2<br>TW 201918512 A<br>KR 10-2020-0054905 A | |
| JP 50-046753 A | 25 April 1975 | (Family: none) | |
| WO 2020/184427 A1 | 17 September 2020 | US 2021/0380794 A1<br>claims 1-2, 7, examples<br>EP 3936534 A1<br>KR 10-2021-0139226 A<br>CN 113631590 A<br>TW 202045564 A | |
| WO 2021/210502 A1 | 21 October 2021 | US 2022/0356338 A1<br>claims 1-2, examples<br>EP 4137522 A1<br>KR 10-2022-0136351 A<br>CN 115413289 A<br>TW 202146564 A | |
| JP 2004-500459 A | 08 January 2004 | US 2002/0026014 A1<br>claims 1, 8, examples<br>WO 2001/059005 A2<br>EP 1263857 A2 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019004059 A
- WO 2020184427 A
- WO 2021210502 A
- WO 2010082633 A
- WO 2018225586 A
- JP 5833657 B
- WO 2016017801 A